(19) Europäisches Patentamt

European Patent Office

Office européen des brevets

(11) Veröffentlichungsnummer: **0 310 812 B1**

(12) **EUROPÄISCHE PATENTSCHRIFT**

(45) Veröffentlichungstag der Patentschrift: **08.04.92**

(21) Anmeldenummer: **88114162.6**

(22) Anmeldetag: **31.08.88**

(51) Int. Cl.⁵: **G11B 11/10**

(54) **Verfahren zur Verringerung der Rauschanteile in einem Datensignal und optische Abtastvorrichtung.**

(30) Priorität: **30.09.87 DE 3732874**

(43) Veröffentlichungstag der Anmeldung:
**12.04.89 Patentblatt 89/15**

(45) Bekanntmachung des Hinweises auf die
Patenterteilung:
**08.04.92 Patentblatt 92/15**

(84) Benannte Vertragsstaaten:
**AT BE CH DE ES FR GB GR IT LI LU NL SE**

(56) Entgegenhaltungen:
**FR-A- 2 591 787**
**US-A- 4 451 863**

**PATENT ABSTRACTS OF JAPAN, Band 10,
Nr. 102 (P-448)[2159], 18. April 1986, Seite 3 P
448; & JP-A-60 234 235 (MATSUSHITA DENKI
SANGYO K.K.) 20-11-1985**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Morimoto, Yasuaki
Tallardstrasse 20
W-7730 Villingen-Schwenningen(DE)**
Erfinder: **Zucker Friedhelm
Frankenstrasse 5
W-7730 Villingen-Schwenningen(DE)**
Erfinder: **Büchler, Christian
Keltenweg 3
W-7730 VS-Marbach(DE)**

# Beschreibung

Die Erfindung betrifft ein Verfahren zur Verringerung der Rauschanteile im Datensignal für eine optische Abtastvorrichtung zum Lesen und/oder Beschreiben eines magneto-optischen Aufzeichnungsträgers, wobei eine Lichtquelle Licht auf den Aufzeichnungsträger strahlt und wobei das vom Aufzeichnungsträger reflektierte bzw. das den Aufzeichnungsträger durchstrahlende Licht in Abhängigkeit von seiner Polarisationsrichtung auf einen ersten Photodetektor oder auf einen zweiten Photodetektor gelenkt wird.

Die Erfindung betrifft ebenso eine optische Abtastvorrichtung zur Durchführung des Oben genannten Verfahrens.

Ein magneto-optischer Aufzeichnungsträger, auch unter der Bezeichnung magneto-optische Platte bekannt, ist in dem Aufsatz "Magnetooptische Versuche dauern an" in Funkschau 13, 20. Juni 1986, auf Seite 37 - 41 beschrieben.

Im Gegensatz zu einer herkömmlichen CD-Platte weist eine magneto-optische Platte keine Pits auf. Hinter der lichtdurchlässigen Schicht befindet sich eine magnetische Schicht, in die Daten aufzeichenbar und von der Daten lesbar sind. Es wird zunächst erläutert, wie Daten auf eine magneto-optische Platte geschrieben werden.

Mittels eines auf die Platte fokussierten Laserstrahls wird die magnetische Schicht über die Curie-Temperatur erhitzt. Meist genügt es jedoch, die magnetische Schicht nur bis zu der etwas unterhalb der Curie-Temperatur liegenden Kompensationstemperatur zu erwärmen. Hinter dem Brennpunkt auf der Platte ist ein Elektromagnet angeordnet, der den vom Laserstrahl erhitzten Bereich in die eine oder andere Magnetisierungsrichtung magnetisiert.

Weil nach Abschalten des Laserstrahls die erhitzte Stelle wieder unter die Curie-Temperatur abkühlt, bleibt die vom Elektromagneten festgelegte Magnetisierungsrichtung erhalten; sie friert sozusagen ein. Auf diese Weise werden die einzelnen Bits in Domänen unterschiedlicher Magnetisierungsrichtung gespeichert. Dabei entspricht z.B. die eine Magnetisierungsrichtung einer Domäne einer logischen Eins, während die entgegengesetzte Magnetisierungsrichtung eine logische Null darstellt.

Zum Lesen der Daten macht man sich den Kerr-Effekt zunutze. Die Polarisationsebene eines linear polarisierten Lichtstrahls wird bei der Reflexion an einem magnetisierten Spiegel um einen meßbaren Winkel gedreht. Je nachdem, in welche Richtung der Spiegel magnetisiert ist, wird die Polarisationsebene des reflektierten Lichtstrahls nach rechts oder nach links gedreht. Weil aber die einzelnen Domänen auf der Platte wie magnetisierte Spiegel wirken, wird die Polarisationsebene eines abtastenden Lichtstrahls je nach der Magnetisierungsrichtung der gerade abgetasteten Domäne um einen zwar kleinen aber dennoch meßbaren Winkel nach links oder rechts gedreht.

Bei magneto-optischen Platten, die der Lichtstrahl durchdringt, wird anstelle des Kerr-Effektes der ähnliche Faraday-Effekt ausgenutzt.

An der Drehung der Polarisationsebene des von der Platte reflektierten bzw. die Platte durchstrahlenden Lichtstrahls erkennt die optische Abtastvorrichtung, welches Bit vorliegt, eine logische Eins oder eine logische Null.

Bei bekannten optischen Abtastvorrichtungen wird Licht in Abhängigkeit von seiner Polarisationsrichtung mittels eines Polarisationsstrahlteilers auf einen ersten Photodetektor oder einen zweiten Photodetektor gelenkt. Aus dem Differenzsignal dieser beiden Photodetektoren wird das Datensignal gewonnen.

Damit der Polarisationsstrahlteiler Licht, dessen Polarisationsebene nicht durch den Kerr- oder Faraday-Effekt gedreht ist, symmetrisch aufteilt - das bedeutet, daß jeder Photodetektor die gleiche Lichtenergie empfängt - , ist er so zu justieren, daß der Winkel zwischen der nicht gedrehten Polarisationsebene und einer Seitenkante des Polarisationsstrahlteilers 45° beträgt. Wenn nun infolge des Kerr- oder Faraday-Effektes die Polarisationsebene des Lichts in die eine Richtung gedreht ist, so empfängt der eine Photodetektor die gleiche Lichtenergie wie der andere empfängt, wenn die Polarisationsebene des Lichts um den gleichen Winkel in die andere Richtung gedreht ist.

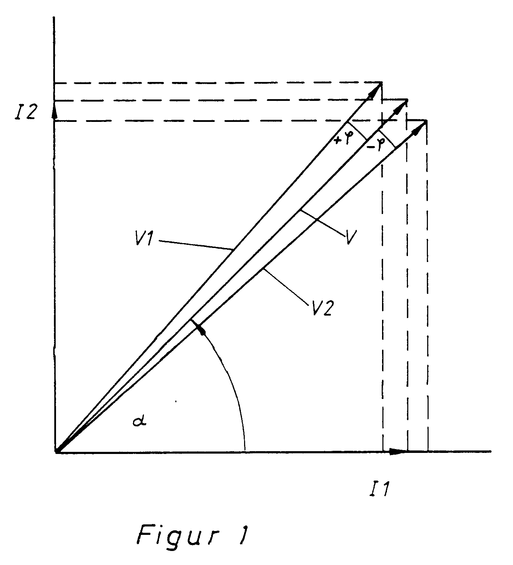

Anhand der Figur 1, die ein Vektor-Diagramm zeigt, wird dieser Sachverhalt nun erläutert.

In der Figur 1 ist der Polarisationsvektor V1 des Lichts gezeigt, dessen Polarisationsebene infolge des Kerr- oder Faraday-Effektes in die eine Richtung gedreht ist. Mit V2 ist in der Figur 1 der Polarisationsvektor des Lichts bezeichnet, dessen Polarisationsebene in die andere Richtung gedreht ist. I1 und I2 sind die Vektorkomponenten, die parallel zu den Kanten des Polarisationsstrahlteilers verlaufen.

Der Polarisationsstrahlteiler ist richtig im Strahlengang justiert, wenn die beiden Vektoren V1 und V2 symmetrisch zur Winkelhalbierenden V liegen, die den Polarisationsvektor des Lichts darstellt, dessen Polarisationsebene nicht gedreht ist. Durch den Kerr- oder Faraday-Effekt wird die Polarisationsebene des Lichts entweder um den Winkel $+\phi$ oder $-\phi$ aus der Mittellage V gedreht.

Anhand der folgenden Formel wird nun erklärt, weshalb der Winkel zwischen den Kanten des Polarisationsstrahlteilers und der nicht gedrehten Polarisationsebene möglichst genau 45° betragen soll. Mit S(t) sind störende Rauschanteile bezeichnet, die durch die optischen Eigenschaften des magneto-optischen Aufzeichnungsträgers und durch Laser-Rauschen verursacht werden. Das magneto-optische Signal MS berechnet sich nach der folgenden Formel:

$$MS = \pm V^{\bullet}[1 + S(t)]^{\bullet}[\cos(\alpha + \phi) - \sin(\alpha + \phi)] =$$

$$= \pm V^{\bullet}[1 + S(t)] \cdot \sqrt{2}\,\sin(45° - \alpha + \phi) =$$

$$= \pm \sqrt{2}\ V^{\bullet}[1 + S(t)]^{\bullet}[\sin(45° - \alpha)^{\bullet}\cos\phi \pm \cos(45° - \alpha)^{\bullet}\sin\phi]$$

Weil die infolge des Kerr- oder Faraday-Effektes bewirkte Drehung der Polarisationsebene um den Winkel $+\phi$ oder $-\phi$ sehr gering ist, wird der $\cos\phi$ ungefähr 1. Ist nun der Polarisationsstrahlteiler im Stahlengang so justiert, daß der Winkel $\alpha$ genau 45° beträgt, so entfällt der Störanteil $S(t) \cdot \sin(45°-\alpha) \cdot \cos\phi$, weil der Term $\sin(45°-\alpha)$ null wird.

Weil jedoch magneto-optischen Platten aus unterschiedlichen Materialien unterschiedliche optische Eigenschaften, z-B. unterschiedliche Doppelbrechung aufweisen, läßt sich der Polarisationsstrahlteiler nur für einen Typ einer magneto-optischen Platte optimal justieren. Bei magneto-optischen Platten mit anderer Doppelbrechung, die aus anderen Materialien gefertigt sind, ist der Störanteil $S(t) \cdot \sin(45°-\alpha) \cdot \cos\phi$ nicht null. Um diesen Störanteil stets zu unterdrücken, müßte der Polarisationsstrahlteiler für jeden Typ einer magneto-optischen Platte neu justiert werden.

Weil sich diese Lösung nur unter großem Aufwand durchführen läßt, ist es Aufgabe der Erfindung, ein Verfahren für eine optische Abtastvorrichtung so zu gestalten, daß die Rauschanteile im magneto-optischen Signal bei magneto-optischen Aufzeichnungsträgern mit unterschiedlichen optischen Eigenschaften stets minimiert werden, ohne daß hierzu der Polarisationsstrahlteiler ständig neu justiert zu werden braucht.

Die Erfindung löst diese Aufgabe dadurch, daß, unabhängig von den optischen Eigenschaften des Aufzeichnungsträgens, die Intensität des vom Aufzeichnungsträger reflektierten bzw. den Aufzeichnungsträger durchstrahlenden Lichts auf einen konstanten Wert geregelt wird.

Diese Aufgabe wird weiterhin durch die optischen Abtastvorrichtungen der Ansprüche 3 und 4 gelöst.

Es zeigen

Figur 2 ein erstes Ausführungsbeispiel

Figur 3 ein zweites Ausführungsbeispiel der Erfindung.

Weil die Intensität des vom Aufzeichnungsträger reflektierten bzw. des den Aufzeichnungsträger durchstrahlenden Lichts auf einen konstanten Wert geregelt wird, wird der Störanteil S(t) null. Daher kann die erfindungsgemäße optische Abtastvorrichtung magneto-optische Platten mit unterschiedlichen optischen Eigenschaften lesen, ohne daß der Polarisationsstrahlteiler vor dem Einlegen einer anderen Platte neu justiert werden muß. Der Polarisationsstrahlteiler braucht außerdem nicht mehr so genau wie beim Stand der Technik justiert zu werden, denn die Störanteile S(t) werden bei der Erfindung ausgeregelt.

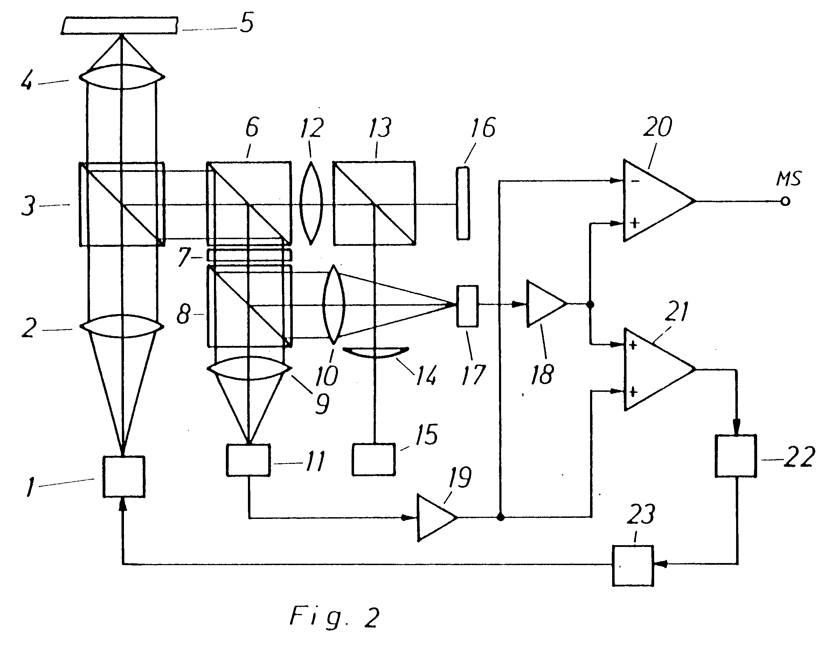

In Figur 2 wird der die Daten abtastende Lichtstrahl von einer Lichtquelle 1, meist eines Lasers, über eine Linse 2, einen Prismenstrahlteiler 3 und eine weitere Linse 4 auf den Aufzeichnungsträger 5 fokussiert, der den Lichtstrahl über die Linse 4 zurück zum Prismenstrahlteiler 3 reflektiert. Vom Prismenstrahlteiler 3 wird der reflektierte Lichtstrahl im rechten Winkel auf einen Prismenstrahlteiler 6 gelenkt. Der den Prismenstrahlteiler 6 gerade durchstrahlende Lichtstrahl trifft über eine Linse 12 auf einen Prismenstrahlteiler 13, der einen Lichtstrahl auf einen Photodetektor 16 lenkt, der z.B. aus zwei Photodioden E und F aufgebaut sein kann. Aus deren Ausgangssignalen ES und FS wird, wie es bei einer optischen Abtastvorrichtung, die nach dem Dreistrahlverfahren arbeitet, einem sogenannten three-beam optical pick-up, bekannt ist, das Spurfehlersignal TE = ES - FS in einem Differenzverstärker gebildet. Vom Prismenstrahlteiler 13 wird aber auch ein Lichtstrahl rechtwinklig über eine Linse 14 auf einen Photodetektor 15 gelenkt, der beispielsweise aus vier quadratförmigen Photodioden A, B, C und D aufgebaut sein kann. Aus deren Ausgangssignalen AS, BS, CS und DS wird, wie es bei optischen Abtastvorrichtungen, die nach dem Dreistrahlverfahren arbeiten, üblich ist, das Fokusfehlersignal FE = (AS + CS) - (BS + DS) gebildet.

Der Prismenstrahlteiler 6 lenkt jedoch auch einen Lichtstrahl rechtwinklig über eine λ/2 Platte 7 zu einem Polarisationsstrahlteiler 8. Im Polarisationsstrahlteiler 8 wird nun der Lichtstrahl über eine Linse 9 auf einen ersten Photodetektor 11 gelenkt, wenn seine Polarisationsebene in die eine Richtung gedreht ist. Dagegen wird der Lichtstrahl vom Polarisationsstrahlteiler 8 über eine Linse 10 auf einen zweiten Photodetektor 17 gelenkt, wenn seine Polarisationsebene in die andere Richtung gedreht ist. Die Photospannung des ersten Photodetektors 11 wird über einen Verstärker 19 dem ersten Eingang eines Summationsverstärkers 21 und dem Subtraktionseingang eines Differenzverstärkers 20 zugeführt. Die Photospannung des zweiten Photodetektors 17 wird über einen Verstärker 18 dem zweiten Eingang des Summationsverstärkers 21 und dem Additionseingang des Differenzverstärkers 20 zugeführt. Der Ausgang des Summationsverstärkers 21 ist über einen Regler 22 mit dem Eingang eines Modulators 23 verbunden, der die Lichtleistung des Lasers 1 so steuert, daß die Intensität des vom Aufzeichnungsträger reflektierten Lichts auf einen konstanten Wert geregelt wird; am Ausgang des Differenzverstärkers 20 ist das Datensignal MS, das die in den magnetischen Domänen des Aufzeichnungsträgens 5 gespeicherten Daten enthält, abnehmbar.

Zur Regelung der Intensität des vom Aufzeichnungsträger 5 reflektierten Lichts auf einen konstanten Wert kann aber auch das Ausgangssignal des Photodetektors 15 oder 16 dem Eingang des Reglers 22 zugeführt werden. Ferner kann ein weiterer Photodetektor vorgesehen sein, der das vom Aufzeichnungsträger 5 reflektierte Licht empfängt und dessen Ausgangssignal der Regelung der Lichtintensität dient.

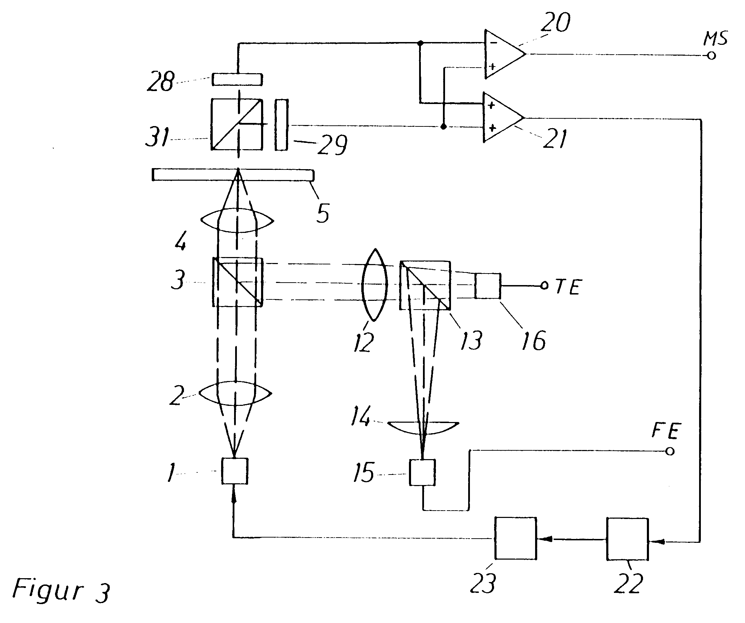

Bei dem in Figur 3 gezeigten Ausführungsbeispiel läuft der von einem Laser 1 erzeugte Lichtstrahl über eine Linse 2, einen Prismenstrahlteiler 3 und eine Linse 4 zum Aufzeichnungsträger 5. Ein Teil des vom Laser 1 ausgesendeten Lichts wird vom Aufzeichnungsträger 5 über die Linse 4 zurück zum Prismenstrahlteiler 3 reflektiert, der einen Lichtstrahl über eine Linse 12 und einen Prismenstrahlteiler 13 auf einen Photodetektor 16 lenkt, aus dessen Ausgangssignalen das Spurfehlersignal TE für den Spurregelkreis erzeugt wird. Der Prismenstrahlteiler 13 lenkt einen Lichtstrahl aber auch über eine Linse 14 auf einen Photodetektor 15, der z.B. als Vierquadrantendetektor aus vier quadratförmigen Photodioden A, B, C und D aufgebaut sein kann. Aus den Ausgangssignalen des Photodetektors 15 wird das Fokusfehlersignal FE für den Fokusregelkreis gewonnen. Hinter dem Aufzeichnungsträger 5 ist ein Polarisationsstrahlteiler 31 vorgesehen, der den Lichtstrahl, dessen Polarisationsebene in die eine Richtung gedreht ist, auf einen Photodetektor 28 lenkt, während er den Lichtstrahl, dessen Polarisationsebene in die andere Richtung gedreht ist, auf einen Photodetektor 29 lenkt. Die beiden Photodetektoren 28 und 29 sind mit den Eingängen eines Differenzverstärkers 20 verbunden.

Wegen des Polarisationsstrahlteilers 31 strahlt entweder auf den einen Photodetektor 28 oder auf den anderen Photodetektor 29 mehr Licht, je nachdem, in welche Richtung die einzelnen magnetischen Domänen des Aufzeichnungsträgers 5 magnetisiert sind. Am Ausgang des Differenzverstärkers 20 ist daher das Datensignal MS abnehmbar, das die in den magnetischen Domänen gespeicherten Daten enthält.

Die beiden Photodetektoren 28 und 29 sind mit den Eingängen eines Summationsverstärkers 21 verbunden, dessen Ausgang mit dem Eingang eines Reglers 22 verbunden ist. Der Ausgang des Reglers 22 ist mit dem Eingang eines Modulators 23 verbunden, dessen Ausgang mit dem Steuereingang des Lasers 1 verbunden ist. Die Intensität des den Aufzeichnungsträger 5 durchstrahlenden Lichts wird mittels des Modulators 23 auf einen konstanten Wert geregelt.

Anstelle des Summationsverstärkers kann ein Photodetektor vorgesehen sein, der das den Aufzeichnungsträger durchstrahlende Licht empfängt und dessen Ausgang mit dem Eingang des Reglers 22 verbunden ist.

**Patentansprüche**

1. Verfahren zur Verringerung der Rauschanteile im Datensignal für eine optische Abtastvorrichtung zum Lesen und/oder Beschreiben eines magneto-optischen Aufzeichnungsträgers (5), wobei eine Lichtquelle (1) Licht auf den Aufzeichnungsträger (5) strahlt und wobei das vom Aufzeichnungsträger (5) reflektierte bzw. das den Aufzeichnungsträger durchstrahlende Licht in Abhängigkeit von seiner Polarisationsrichtung über einen Polarisationsstrahlteiler (8, 31) auf einen ersten Photodetektor (11, 28) oder auf einen zweiten Photodetektor (17, 29) gelenkt wird, **dadurch gekennzeichnet,** daß unabhängig von den optischen Eigenschaften des Aufzeichnungsträgers die Intensität des vom Aufzeichnungsträger (5) reflektierten bzw. des den Aufzeichnungsträger (5) durchstrahlenden Lichts auf einen konstanten Wert geregelt wird.

2. Verfahren nach Anspruch 1, **dadurch gekennzeichnet,** daß ein Photodetektor vorgesehen ist, der das vom Aufzeichnungsträger (5) reflektierte bzw. das den Aufzeichnungsträger (5) durchstrahlende Licht empfängt, und daß dessen Ausgangssignal der Regelung der Lichtintensität auf einen konstanten Wert dient.

3. Optische Abtastvorrichtung zur Durchführung des Verfahrens nach Anspruch 1, wobei der von der Lichtquelle (1) erzeugte Lichtstrahl über eine erste Linse (2), einen ersten Prismenstrahlteiler (3) und eine zweite Linse (4) auf den Aufzeichnungsträger (5) strahlt, wobei der vom Aufzeichnungsträger (5) reflektierte Lichtstrahl über die zweite Linse (4) zum ersten Prismenstrahlteiler (3) zurückläuft, wo er zu einem zweiten Prismenstrahlteiler (6) gelenkt wird, wobei der zweite Prismenstrahlteiler (6) einen Lichtstrahl über eine dritte Linse (12) und einen dritten Prismenstrahlteiler (13) auf einen dritten Photodetektor (16) lenkt, aus dessen Ausgangssignalen das Spurfehlersignal für einen Spurregelkreis gebildet wird, wobei der dritte Prismenstrahlteiler (13) einen Lichtstrahl über eine vierte Linse (14) auf einen vierten Photodetektor (15) lenkt, aus dessen Ausgangssignalen das Fokusfehlersignal für einen Fokusregelkreis gebildet wird, wobei der zweite Prismenstrahlteiler (6) einen Lichtstrahl über eine 2/2-Platte (7), einen Polarisationsstrahlteiler (8) und eine fünfte Linse (9) auf den ersten Photodetektor (11) lenkt und wobei der Polarisationsstrahlteiler (8) einen Lichtstrahl über eine sechste Linse (10) auf den zweiten Photodetektor (17) lenkt, wobei der Ausgang des ersten Photodetektors (11) über einen ersten Verstärker (19) mit dem Subtraktionseingang eines Differenzverstärkers (20) verbunden ist, wobei der Ausgang des zweiten Photodetektors (17) über einen zweiten Verstärker (18) mit dem Additionseingang des Differenzverstärkers (20) verbunden ist und wobei am Ausgang des Differenzverstärkers (20) das Datensignal (MS) abnehmbar ist, das die in den magnetischen Domänen des Aufzeichnungsträgers (5) gespeicherten Daten enthält, **dadurch gekennzeichnet, daß** der Ausgang des ersten bzw. zweiten Photodetektors (11, 17) ebenfalls über den ersten bzw. zweiten Verstärker (19, 18) mit dem einen bzw. anderen Eingang eines Summationsverstärkers (21) verbunden ist und daß der Ausgang des Summationsverstärkers (21) über einen Regler (22) mit einem Modulator (23) verbunden ist, dessen Ausgang mit dem Steuereingang der Lichtquelle (1) verbunden ist.

4. Optische Abtastvorrichtung zur Durchführung des Verfahrens nach Anspruch 1, wobei der von der Lichtquelle (1) erzeugte Lichtstrahl über eine erste Linse (2), einen ersten Prismenstrahlteiler (3) und eine zweite Linse (4) auf den Aufzeichnungsträger (5) strahlt, wobei hinter dem Aufzeichnungsträger (5) ein Polarisationsstrahlteiler (31) vorgesehen ist, der einen Lichtstrahl auf einen ersten Photodetektor (28) und einen Lichtstrahl auf einen zweiten Photodetektor (29) lenkt, wobei der vom Aufzeichnungsträger (5) reflektierte Lichtstrahl über die zweite Linse (4) zum ersten Prismenstrahlteiler (3) zurückläuft, wo er über eine dritte Linse (12) zu einem zweiten Prismenstrahlteiler (13) gelenkt wird, wobei der zweite Prismenstrahlteiler (13) den Lichtstrahl über eine vierte Linse (14) auf einen dritten Photodetektor (15) lenkt, aus dessen Ausgangssignalen das Fokusfehlersignal für einen Fokusregelkreis gebildet wird, wobei der zweite Prismenstrahlteiler (13) einen Lichtstrahl auf einen vierten Photodetektor (16) lenkt, aus dessen Ausgangssignalen das Spurfehlersignal für einen Spurregelkreis gebildet wird, wobei die in einem Differenzverstärker (20) gebildete Differenz der Photospannungen des ersten und zweiten Photodetektors (28, 29) das Datensignal (MS) ergibt, **dadurch gekennzeichnet, daß** die Summe der Photospannungen des ersten und zweiten Photodetektors (28, 29) in einem Summationsverstärker (21) gebildet wird, dessen Ausgang über einen Regler (22) mit dem Eingang eines Modulators (23) verbunden ist, der die Lichtleistung der Lichtquelle (1) so steuert, daß die Intensität des den Aufzeichnungsträger (5) durchstrahlenden Lichts auf einen konstanten Wert geregelt wird.

**Claims**

1. Method for reducing the noise levels in the data signal for an optical scanning device for the reading and/or writing of a magnetooptical record medium (5), a light source (1) radiating light onto the record medium (5) and the light reflected by the record medium (5) or radiating through the record medium being directed depending on its direction of polarization via a polarization beam splitter (8, 31) to a first photodetector (11, 28) or to a second photodetector (17, 29), characterized in that, independently of the optical properties of the record medium, the intensity of the light reflected by the record medium (5) or radiating through the record medium (5) is adjusted to a constant value.

2. Method according to claim 1, characterized in that a photodetector is provided which receives the light reflected by the record medium (5) or radiating through the record medium (5), and that its output signal serves to adjust the light intensity to a constant value.

3. Optical scanning device for implementing the method according to claim 1, the light beam produced by the light source (1) radiating onto the record medium (5) via a first lens (2), a first prism-type beam splitter (3) and a second lens (4), the light beam reflected by the record medium (5) returning via the second lens (4) to the first prism-type beam splitter (3), where it is directed to a second prism-type beam splitter (6), the second prism-type beam splitter (6) directing a light beam via a third lens (12) and a third prism-type beam splitter (13) to a third photo-detector (16), from the output signals of which the tracking error signal for a tracking control loop is formed, the third prism-type beam splitter (13) directing a light beam via a fourth lens (14) to a fourth photo-detector (15), from the output signals of which the focus error signal for a focus control loop is formed, the second prism-type beam splitter (6) directing a light beam via a λ/2 plate (7), a polarization beam splitter (8) and a fifth lens (9) to the first photodetector (11) and the polarization beam splitter (8) directing a light beam via a sixth lens (10) to the second photodetector (17), the output of the first photodetector (11) being connected via a first amplifier (19) to the subtracting input of a differential amplifier (20), the output of the second photodetector (17) being connected via a second amplifier (18) to the adding input of the differential amplifier (20) and the data signal (MS), which contains the data stored in the magnetic domains of the record medium (5), being detectable at the output of the differential amplifier (20), characterized in that the output of the first or second photodetector (11, 17) is likewise connected via the first or second amplifier (19, 18) to one input or the other of a summing amplifier (21) and that the output of the summing amplifier (21) is connected via a controller (22) to a modulator (23), the output of which is connected to the control input of the light source (1).

4. Optical scanning device for implementing the method according to claim 1, the light beam produced by the light source (1) radiating onto the record medium (5) via a first lens (2), a first prism-type beam splitter (3) and a second lens (4), a polarization beam splitter (31) being provided behind the record medium (5) which directs a light beam to a first photodetector (28) and a light beam to a second photodetector (29), the light beam reflected by the record medium (5) returning via the second lens (4) to the first prism-type beam splitter (3), where it is directed via a third lens (12) to a second prism-type beam splitter (13), the second prism-type beam splitter (13) directing the light beam via a fourth lens (14) to a third photodetector (15), from the output signals of which the focus error signal for a focus control loop is formed, the second prism-type beam splitter (13) directing a light beam to a fourth photodetector (16), from the output signals of which the tracking error signal for a tracking control loop is formed, the difference of the photovoltages of the first and second photodetectors (28, 29) formed in a differential amplifier (20) yielding the date signal (MS), characterized in that the sum of the photovoltages of the first and second photodetectors (28, 29) is formed in a summing amplifier (21), the output of which is connected via a controller (22) to the input of a modulator (23), which controls the light intensity of the light source (1) such that the intensity of the light radiating through the record medium (5) is adjusted to a constant value.

**Revendications**

1. Procédé pour diminuer le niveau de bruit photoélectrique dans le signal de données pour un dispositif de balayage optique pour la lecture et/ou l'enregistrement d'un support d'enregistrement magnéto-optique (5), une source de lumière (1) rayonnant de la lumière sur le support d'enregistrement (5) et la lumière qui est réfléchie par le support d'enregistrement (5) ou qui rayonne à travers le support d'enregistrement étant guidée, en fonction de son sens de polarisation, sur un premier détecteur photoélectrique (11, 20) ou sur un second détecteur photoélectrique (17, 26) par l'intermédiaire d'un séparateur de faisceaux de polarisation (8, 31), **caractérisé en ce** que l'intensité de la lumière réfléchie par le support d'enregistrement (5) ou qui rayonne à travers le support d'enregistrement (5) est réglée à une valeur constante, indépendamment des propriétés optiques du support d'enregistrement.

2. Procédé selon la revendication 1, **caractérisé en ce** qu'il est prévu un détecteur photoélectrique qui reçoit la lumière réfléchie par le support d'enregistrement (5) ou qui rayonne à travers le support d'enregistrement (5) et que son signal de sortie sert au réglage de l'intensité lumineuse à une valeur constante.

3. Dispositif de balayage optique pour réaliser le procédé selon la revendication 1, le faisceau lumineux produit par la source lumineuse (1) rayonnant sur le support d'enregistrement (5) par l'intermédiaire d'une première lentille (2), d'un premier séparateur de faisceaux à prismes (3) et d'une seconde lentille (4), le faisceau lumineux réfléchi par le support d'enregistrement (5) revenant par la seconde lentille (4) au premier séparateur de faisceaux à prismes (3) où il est guidé vers un second séparateur de faisceaux à prismes (6), le second séparateur de faisceaux à prismes (6) guidant un faisceau lumineux sur un troisième détecteur photoélectrique (16) par l'intermédiaire d'une troisième lentille (12) et d'un troisième séparateur de faisceaux à prismes (13), détecteur à partir des signaux de sortie duquel le signal d'erreur de piste est formé pour une boucle d'asservissement de piste, le troisième séparateur de faisceaux à prismes (13) guidant un faisceau lumineux par l'intermédiaire d'une quatrième lentille (14) sur un quatrième détecteur photoélectrique (15) à partir des signaux de sortie duquel le signal d'erreur de foyer est formé pour une boucle d'asservissement de foyer, le second séparateur de faisceaux à prismes (6) guidant un faisceau lumineux sur le premier détecteur photoélectrique (11) par l'intermédiaire d'un disque 2/2 (7), d'un séparateur de faisceaux de polarisation (8) et d'une cinquième lentille (9) et le séparateur de faisceaux de polarisation (8) guidant un faisceau lumineux par l'intermédiaire d'une sixième lentille (10) sur le second détecteur photoélectrique (17), la sortie du premier détecteur photoélectrique (11) étant reliée par l'intermédiaire d'un premier amplificateur (19) à l'entrée de soustraction d'un amplificateur différenciateur (20), la sortie du second détecteur photoélectrique (17) étant reliée par l'intermédiaire d'un second amplificateur (18) à l'entrée d'addition de l'amplificateur différenciateur (20), le signal de données (MS) qui contient les données mémorisées dans les domaines magnétiques du support d'enregistrement pouvant être prélevé à la sortie de l'amplificateur différenciateur (20). **caractérisé en ce** que la sortie du premier et/ou du second détecteur photoélectrique (11, 17) étant également reliée à l'une et/ou l'autre entrée d'un amplificateur sommateur (21) par l'intermédiaire du premier et/ou du second amplificateur (19, 18) et que la sortie de l'amplificateur sommateur (21) est reliée par un régulateur (22) à un modulateur (23) dont la sortie est reliée à l'entrée de commande de la source de lumière (1).

4. Dispositif de balayage optique pour réaliser le procédé selon la revendication 1, le faisceau lumineux produit par la source de lumière (1) rayonnant sur le support d'enregistrement (5) par l'intermédiaire d'une première lentille (2), d'un premier séparateur de faisceau à prismes (3) et d'une seconde lentille (4), un séparateur de faisceaux de polarisation (31) étant prévu derrière le support d'enregistrement (5), séparateur qui guide un faisceau lumineaux sur un premier détecteur photoélectrique (28) et un faisceau lumineux sur un second détecteur photoélectrique (29), le faisceau lumineux réfléchi par le support d'enregistrement (5) revenant par l'intermédiaire de la seconde lentille (4) au premier séparateur de faisceaux à prismes (3), où il est dirigé par une troisième lentille (12) vers un second séparateur de faisceaux à prismes (13), le second séparateur de faisceaux à prismes (13) guidant le faisceau lumineux par l'intermédiaire d'une quatrième lentille (14) sur un troisième détecteur photoélectrique (15) à partir des signaux de départ duquel le signal d'erreur de foyer est formé pour une boucle d'asservissement de foyer, le second séparateur de faisceaux à prismes (13) guidant un faisceau lumineux sur un quatrième détecteur photoélectrique (16) à partir des signaux de sortie duquel le signal d'erreur de piste est formé pour une boucle d'asservissement de piste, la différence des tensions photoélectriques du premier et du second détecteur photoélectrique (28, 29) qui est formée dans un amplificateur différenciateur (20) donnant le signal de données (MS), **caractérisé en ce** que la somme des tensions photoélectriques du premier et du second détecteur photoélectrique (28, 29) est formée dans un amplificateur sommateur (21) dont la sortie est reliée par un régulateur (22) à l'entrée d'un modulateur (23) qui commande l'intensité lumineuse de la source lumineuse (1) de manière telle que l'intensité de la lumière qui rayonne à travers le support d'enregistrement (5) est réglée à une valeur constante.

Figur 1

Fig. 2

EP 0 310 812 B1

Figur 3